# EUROPEAN PATENT APPLICATION

(11) **EP 3 522 042 A1**
(43) Date of publication of application: **07.08.2019**
(21) Application number: 18179472.8
(22) Date of filing: 25.06.2018
(51) Int. Cl.: G06F 17/30

(54) **METHOD AND APPARATUS FOR INFORMATION PROCESSING, SERVER AND COMPUTER READABLE MEDIUM**

(30) Priority: 05.02.2018 CN 201810113384
(71) Applicant: Beijing Elex Technology Co. Ltd., Beijing 100001 (CN)
(72) Inventor: HUANG, Yuanqiang, Beijing, 100001 (CN)
(74) Representative: Penza, Giancarlo

(57) **Abstract**

The embodiments of the present disclosure relate to information processing technology and provide a method and an apparatus for information processing, a server and a computer readable medium, capable of further improving the stability of data storage. In the method, in response to a data modification request from a client, a server modifies a first target data specified by the data modification request to obtain a second target data; writes the second target data into a log file in a specified scheme; and synchronizes the log file to a database at a network side. The embodiments of the present disclosure are applicable in a process for data stability management in a device memory.

## Description

### TECHNICAL FIELD

The present disclosure relates to information processing technology, and more particularly, to a method and an apparatus for information processing, a server and a computer readable medium.

### BACKGROUND

Typically, there may be higher information processing delays and slower responses to clients at a server during peak hours of user logins. This is because of more concurrent operations within the server, e.g., simultaneous accesses to a database, as the number of user logins increases. In order to ensure a correct system logic, typically a resource lock is provided to guarantee serial executions of concurrent operations to access the database, resulting in longer latency many operations have to wait before being executed. In order to solve or mitigate such problem, the server generally loads the data in the database to a memory and accelerates the concurrent processing by operating the memory directly.

A conventional solution operates on a per user basis. The data relevant to a user can be loaded from the database to the memory of the server all at once and all operations by the user will operate his/her own data in the memory. Once the data is modified, the operation result will be directly fed back to the user. Then, the modified data in the memory will be written back to the downstream database periodically, so as to guarantee a stable storage of the data and no data loss.

While the stability of data can be guaranteed to some extent in this way, in some extreme cases, e.g., when the server is down and the data in the memory has not been written back to the database timely, the data will still be lost.

### SUMMARY

In view of the above, the embodiments of the present disclosure provide a method and an apparatus for information processing, a server and a computer readable medium, capable of further improving the stability of data storage.

In a first aspect, a method for information processing, performed by a server, is provided according to an embodiment of the present disclosure. The method includes: modifying, in response to a data modification request from a client, a first target data specified by the data modification request to obtain a second target data; writing the second target data into a log file in a specified scheme; and synchronizing the log file to a database at a network side.

Further to the above aspect and any of the embodiments, an embodiment is provided, in which the operation of writing the second target data into the log file in the specified scheme includes: writing the second target data into the log file directly when the log file is empty; or appending the second target data to an end of content stored in the log file when the log file is not empty.

Further to the above aspect and any of the embodiments, an embodiment is provided, in which the operation of synchronizing the log file to the database at the network side includes: extracting a third target data to be synchronized from the log file; synchronizing the third target data to the database at the network side; and deleting the third target data from the log file.

Further to the above aspect and any of the embodiments, an embodiment is provided, in which the method further includes, subsequent to writing the second target data into the log file in the specified scheme: returning operation success prompt information to the client.

Further to the above aspect and any of the embodiments, an embodiment is provided, in which the method further includes: reading the log file from a local memory when the server is activated; and updating data in the database at the network side based on content stored in the log file.

In a second aspect, an apparatus for information processing, in a server, is provided according to an embodiment of the present disclosure. The apparatus includes: a modifying unit configured to modify, in response to a data modification request from a client, a first target data specified by the data modification request to obtain a second target data; a writing unit configured to write the second target data into a log file in a specified scheme; and a synchronizing unit configured to synchronize the log file to a database at a network side.

Further to the above aspect and any of the embodiments, an embodiment is provided, in which the writing unit is configured to: write the second target data into the log file directly when the log file is empty; or append the second target data to an end of content stored in the log file when the log file is not empty.

Further to the above aspect and any of the embodiments, an embodiment is provided, in which the synchronizing unit includes: an extracting module configured to extract a third target data to be synchronized from the log file; a synchronizing module configured to synchronize the third target data to the database at the network side; and a deleting module configured to delete the third target data from the log file.

Further to the above aspect and any of the embodiments, an embodiment is provided, in which the apparatus further includes: a returning unit configured to return operation success prompt information to the client.

Further to the above aspect and any of the embodiments, an embodiment is provided, in which the apparatus further includes: a reading unit configured to read the log file from a local memory when the server is activated; and an updating unit configured to update data in the database at the network side based on content stored in the log file.

In a third aspect, a server is provided according to an embodiment of the present disclosure. The server includes a processor, a memory, a communication interface and a bus. The memory stores computer executable instructions. The processor is connected to the memory via the bus. When the server is operating, the processor executes the computer executable instructions stored in the memory to cause the server to perform the steps of the method according to the first aspect and any embodiments thereof.

In a fourth aspect, a computer readable storage medium is provided. The computer readable storage medium has a computer program stored thereon. The program, when executed by a processor, causes the processor to perform the steps of the method according to the first aspect and any embodiments thereof.

The embodiments of the present disclosure provide a method and an apparatus for information processing, a server and a computer readable medium. Each time the data in the memory is modified, it can be stored in the log file synchronously and then the log file can be synchronized to the database at the network side. Since the log file can be stored rapidly at the local storage of the server, even if the server is powered down, it is possible to ensure that the modified data will not be lost. Compared with the conventional solution which needs to synchronize the data in the memory to the database at the network side by periodically importing the data to the database, the data can be written into the log file rapidly, so as to ensure that the modified data will not be lost when the server is powered down, thereby improving the stability of data storage.

### BRIEF DESCRIPTION OF DRAWINGS

In order to more clearly illustrate technical solutions of embodiments of the present disclosure, the accompanying drawings used in the embodiments are briefly described below. The drawings described below are merely a part of the embodiments of the present disclosure. Based on these drawings, those skilled in the art can obtain other drawings without any creative effort.
Fig. 1 is a block diagram of a communication system in the prior art;
Fig. 2 is a flowchart illustrating a method for data synchronization in the prior art;
Fig. 3 is a block diagram of a communication system according to an embodiment of the present disclosure;
Fig. 4 is a flowchart illustrating a method for information processing according to an embodiment of the present disclosure;
Fig. 5 is a flowchart illustrating a method for information processing according to another embodiment of the present disclosure;
Fig. 6 is a schematic diagram showing an empty region in a log file according to an embodiment of the present disclosure;
Fig. 7 is a flowchart illustrating a method for information processing according to another embodiment of the present disclosure;
Fig. 8 is a flowchart illustrating a method for information processing according to another embodiment of the present disclosure;
Fig. 9 is a flowchart illustrating a method for information processing according to another embodiment of the present disclosure;
Fig. 10 is a block diagram of an apparatus for information processing according to an embodiment of the present disclosure;
Fig. 11 is a block diagram of an apparatus for information processing according to another embodiment of the present disclosure;
Fig. 12 is a block diagram of an apparatus for information processing according to another embodiment of the present disclosure;
Fig. 13 is a block diagram of an apparatus for information processing according to another embodiment of the present disclosure; and
Fig. 14 is a block diagram of a server according to an embodiment of the present disclosure.

### DESCRIPTION OF EMBODIMENTS

In order to better understand technical solutions of the present disclosure, the embodiments of the present disclosure are described in details with reference to the drawings.

It should be clear that the described embodiments are merely part of the embodiments of the present disclosure rather than all of the embodiments. All other embodiments obtained by those skilled in the art without paying creative labor shall fall into the protection scope of the present disclosure.

The terms used in the embodiments of the present disclosure are merely for the purpose of describing specific embodiment, rather than limiting the present disclosure. The terms "a", "an", "the" and "said" in a singular form in the embodiments of the present disclosure and the attached claims are also intended to include plural forms thereof, unless noted otherwise.

It should be understood that the term "and/or" used in the context of the present disclosure is to describe a correlation relation of related objects, indicating that there may be three relations, e.g., A and/or B may indicate only A, both A and B, and only B. In addition, the symbol "/" in the context generally indicates that the relation between the objects in front and at the back of "/" is an "or" relationship.

It should be understood that although the terms 'first', 'second' and 'third' may be used in the present disclosure to describe elements, the elements should not be limited to these terms. These terms are used only to distinguish the elements from each other. For example, without departing from the scope of the embodiments of the present disclosure, a first element may also be referred to as a second element. Similarly, the second element may also be referred to as the first element.

Depending on the context, the term "if' as used herein can be interpreted as "when", "in a case where", "in response to determining ..." or "in response to detecting ...". Similarly, depending on the context, the phrase "if it is determined ..." or "if it is detected ... (a statement of a condition or event)" can be interpreted as "when it is determined ...", "in response to determining ...", "when it is detected ... (a statement of a condition or event)", or "in response to detecting ... (a statement of a condition or event)".

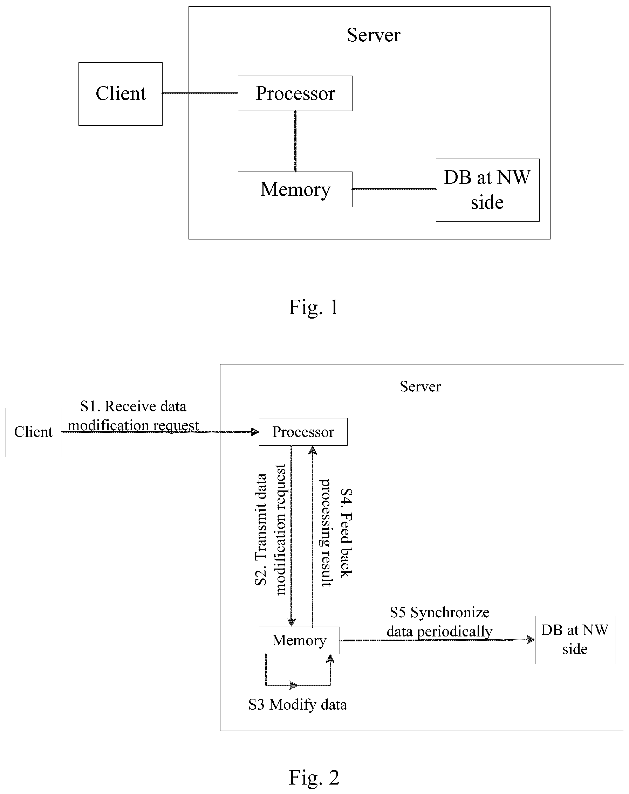

A method for information processing is provided according to an embodiment of the present disclosure, which is applicable to various B/S or C/S architectures. A server having any of various structures may achieve functions such as processing and responding to a request from a client, reading and writing data. It can include a processor, a memory and a database at a network side and can have a structure shown in Fig. 1.

Referring to the process shown in Fig. 2, a typical process at the server side when a client makes a data modification request will be introduced briefly below.

At S1, the processor receives a data modification request from a client.

At S2, when a target data specified by the data modification request has been determined, the processor sends a data modification instruction to the memory.

At S3, upon receiving the data modification instruction, the memory performs a corresponding data modification operation to modify a corresponding data in the memory.

At S4, after completing the data modification operation, the memory feeds back a data operation result to the processor.

At S5, the memory synchronizes the modified data to the database at the network side periodically.

At S6, upon receiving the data operation result fed back from the memory, the processor forwards the data operation result to the client.

In this process, there will be a certain time gap between S4 and S5, which may be larger as the workload on the process increases and the number of memory IO request queues increases. If the device is powered down during this process, all the data in the memory will be lost. However, the data in the database at the network side remains unmodified due to lack of synchronization. In this case, when the server is powered up again, the data used at the client will be inconsistent with the data stored at the server side, which may severely affect subsequent information processing between the client and the server.

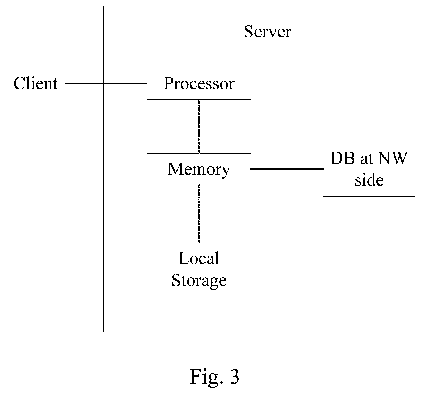

In order to avoid the above data loss when the server is powered down in the prior art, the embodiments of the present disclosure use a log file to store the modified data content. The embodiments are applicable in the system architecture shown in Fig. 3. When compared with Fig. 2, the embodiments of the present disclosure introduce application of local storage in the server. In the embodiments of the present disclosure, the essential difference of interest between the local storage and the database at the network side lies in that the local storage can communicate with the memory of the server via e.g., a data bus, with a high transmission rate and a short transmission distance, whereas the database at the network side and the memory of the server need to communicate with each other via e.g., a network connection with a relatively lower transmission rate and a longer transmission distance than the local storage.

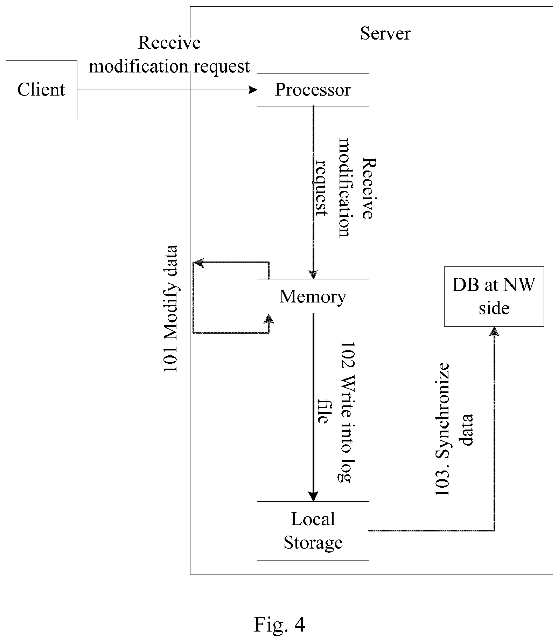

Based on the architecture shown in Fig. 3, a method for information processing is provided according to an embodiment of the present disclosure. As shown in Fig. 4, the method includes the following steps.

At 101, in response to a data modification request from a client, a first target data specified by the data modification request is modified to obtain a second target data.

Here the first target data and the second target data refer to the data corresponding to the same data modification request in a memory, before and after the modification, respectively.

At 102, the second target data is written into a log file in a specified scheme.

Here the specified scheme refers to the data writing scheme in which the second target data is written into the log file. In an embodiment of the present disclosure, the specified scheme may include: a random writing scheme in which the data is written in any arbitrary position in the log file and may possibly delete and modify the original data, and an appending scheme in which the data is stored as a new data without affecting the content already stored in the log file.

Preferably, in order to guarantee that various modified data items can be stored in the log file correctly, the appending scheme can be used in an embodiment of the present disclosure. The detailed implementation process will be described hereinafter.

The log file is placed in a local storage of the server.

At 103, the log file is synchronized to a database at a network side.

In an embodiment of the present disclosure, the local storage can be any non-volatile storage medium or virtual storage space configured based on any non-volatile storage medium.

The embodiments of the present disclosure provide a method for information processing. Each time the data in the memory is modified, it can be stored in the log file synchronously and then the log file can be synchronized to the database at the network side. Since the log file can be stored rapidly at the local storage of the server, even if the server is powered down, it is possible to ensure that the modified data will not be lost. Compared with the conventional solution which needs to synchronize the data in the memory to the database at the network side by periodically importing the data to the database, the data can be written into the log file rapidly, so as to ensure that the modified data will not be lost when the server is powered down, thereby improving the stability of data storage.

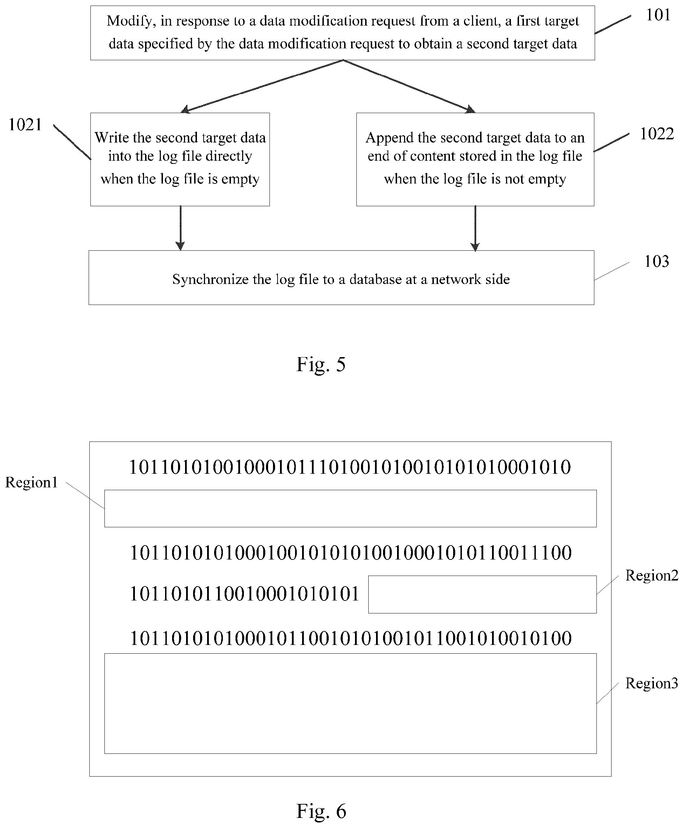

For the appending scheme, a specific implementation of the step 102 is provided according to an embodiment of the present disclosure. As shown in Fig. 5, the step 102 can include the following steps.

At 1021, when the log file is empty, the second target data is written into the log file directly.

At 1022, when the log file is not empty, the second target data is appended to an end of content stored in the log file.

Here, the log file can be a file that is pre-created in the local storage of the server and complies with a particular format. In an embodiment of the present disclosure, the log file can only be used for storing the data modified in the memory. Various data in the log file can maintain their data formats used when they are loaded to the memory, such that they can be used conveniently and directly after being read from the log file, without any re-parsing operation.

Further, it is required in the appending scheme according to the embodiment of the present disclosure that, regardless of the distribution of the data currently stored in the log file, the newly added data has to be placed at the end of all existing data. It can be appreciated that, if there are available storage spaces between data segments in the log file due to synchronous deletion or redundancy reduction, they cannot be used. The schematic diagram of the storage space as shown in Fig. 6 can be used as information facilitating understanding of the above requirement. In the schematic diagram, Regions 1, 2 and 3 are all available storage spaces, but only Region 3 is located at the end of all existing data and can thus be used. In contrast, Regions 1 and 2 cannot be used. Of course, when the storage space in the server is limited, data can be added to Region 1 or 2, but some additional information, such as a version number or a timestamp, would be required to ensure the timeliness of the data.

While the time required for writing one data item to the log file will not exceed 1ms, in order to further improve the storing speed and avoid the performance degradation due to concurrent massive data, in the embodiment of the present disclosure, it is preferable to use the appending scheme to write data into the log file.

Further, it is to be noted that there can be more than one log file as desired. When there are a plurality of log files, one of them can be selected and the data can be added to that log file with high priority until there is no available space at the end of that log file, and then the data can be stored in another log file. Alternatively, one of the log files can be selected randomly for adding data. The present disclosure is not limited to any of the above schemes.

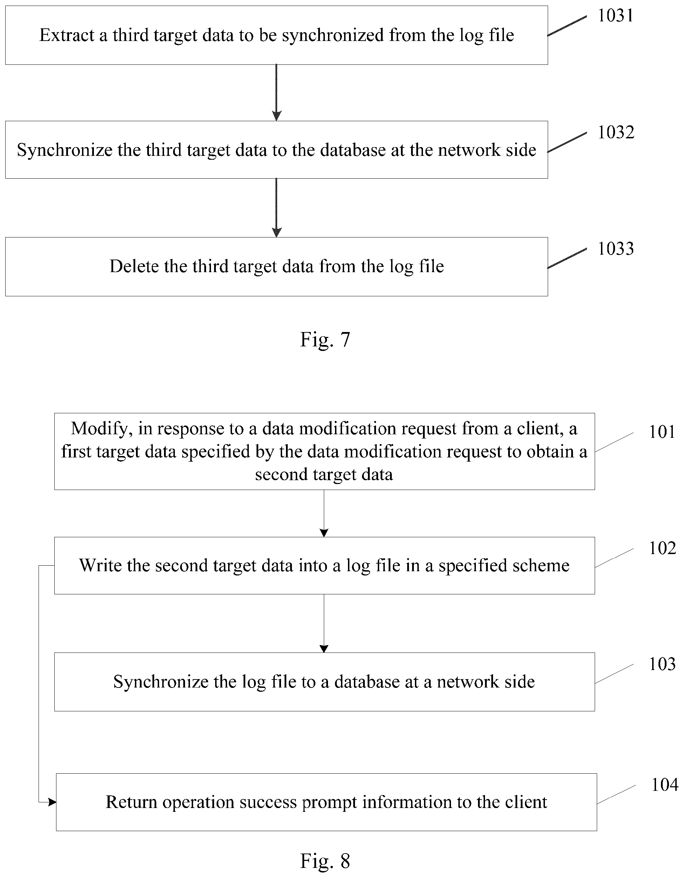

In order to avoid unnecessary repetitive operations when the data is synchronized from the local storage of the server to the network side, the data that has been synchronized can be deleted from the log file. In a possible embodiment of the present disclosure, a specific implementation of the step 103 is provided. As shown in Fig. 7, the step 103 can include the following steps.

At 1031, a third target data to be synchronized is extracted from the log file.

Here, the third target data can be a data selected randomly or extracted in accordance with a predefined screening policy from the log file. The predefined screening policy may include extracting data sequentially in an order of positions at which they are stored in the file, in an order of time at which they are written into the file, or in an order of sizes of storage spaces they occupy in the file. The present disclosure is not limited to any specific policy.

At 1032, the third target data is synchronized to the database at the network side.

At 1033, the third target data is deleted from the log file.

In order to allow the client to know that the data modification operation has completed, after the step 102, the client can be notified. An implementation process is provided according to an embodiment of the present disclosure. As shown in Fig. 8, the process includes the follow step.

At 104, operation success prompt information is returned to the client.

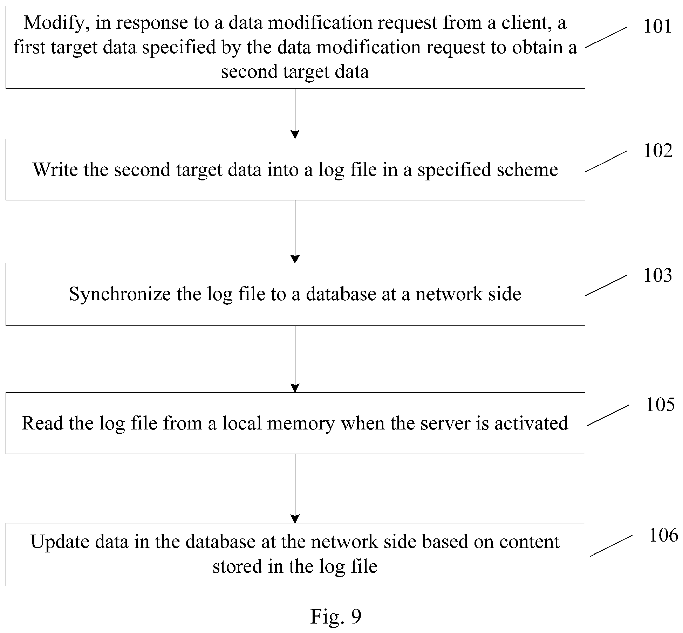

When the server is down, the data at the network side needs to be updated based on the current log file. An implementation process is provided according to an embodiment of the present disclosure. As shown in Fig. 9, the process includes the follow step.

At 105, the log file is read from a local memory when the server is activated.

In order to ensure the correctness of the data stored in the database at the network side, after the server has been activated and before it can serve devices such as the client, data synchronization based on the log file needs to be performed first. After the data synchronization, the log file can be cleared or simply deleted. Accordingly, when a new modified data has been generated, it can be appended to an existing log file or a new log file can be created and the data can be written into the new log file.

At 106, data in the database at the network side is updated based on content stored in the log file.

For better understanding, the overall implementation process of the embodiment of the present disclosure will be described briefly in the following steps. The process includes the following steps.

When a user logs in, the server loads all data of the user from the database at the network side to the memory.

All user operations require the client to initiate a modification to the data in the memory.

After modifying the data in the memory, the server writes the modified data into a log file and notifies the client of a successful operation. Meanwhile, the new modified data is appended to the log file.

With the log file, the modified data is stored in the local storage of the server.

A background thread is activated to write the modified data in the memory as recorded in the log file back to the database at the network side for storing. The corresponding record in the log file can be deleted.

Each time the server is restarted, it will first check whether there is any remaining record in the log file. If so, all the data in the log file will be written back to the database first before proceeding with any other services.

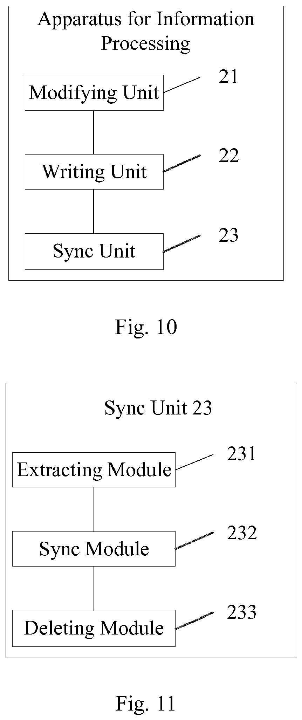

According to an embodiment of the present disclosure, an apparatus for information processing, in a server, is provided. The apparatus can perform the method flows described above. As shown in Fig. 10, the apparatus includes:
a modifying unit 21 configured to modify, in response to a data modification request from a client, a first target data specified by the data modification request to obtain a second target data;
a writing unit 22 configured to write the second target data into a log file in a specified scheme; and
a synchronizing unit 23 configured to synchronize the log file to a database at a network side.

Optionally, the writing unit 22 can be configured to: write the second target data into the log file directly when the log file is empty; or append the second target data to an end of content stored in the log file when the log file is not empty.

Optionally, as shown in Fig. 11, the synchronizing unit 23 can include: an extracting module 231 configured to extract a third target data to be synchronized from the log file; a synchronizing module 232 configured to synchronize the third target data to the database at the network side; and a deleting module 233 configured to delete the third target data from the log file.

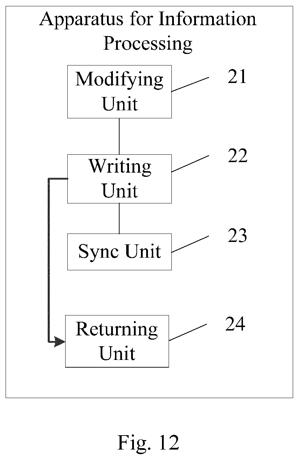

Optionally, as shown in Fig. 12, the apparatus can further include: a returning unit 24 configured to return operation success prompt information to the client.

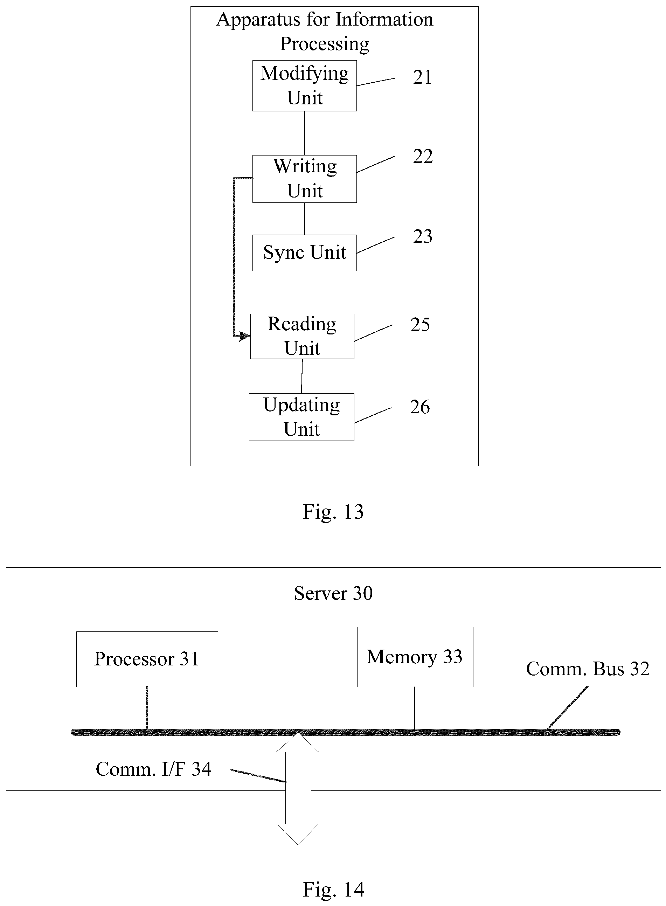

Optionally, as shown in Fig. 13, the apparatus can further include: a reading unit 25 configured to read the log file from a local memory when the server is activated; and an updating unit 26 configured to update data in the database at the network side based on content stored in the log file.

The embodiments of the present disclosure provide an apparatus for information processing. Each time the data in the memory is modified, it can be stored in the log file synchronously and then the log file can be synchronized to the database at the network side. Since the log file can be stored rapidly at the local storage of the server, even if the server is powered down, it is possible to ensure that the modified data will not be lost. Compared with the conventional solution which needs to synchronize the data in the memory to the database at the network side by periodically importing the data to the database, the data can be written into the log file rapidly, so as to ensure that the modified data will not be lost when the server is powered down, thereby improving the stability of data storage.

According to an embodiment of the present disclosure, a server 30 is provided. As shown in Fig. 14, the server 30 includes at least one processor 31, a communication bus 32, a memory 33 and at least one communication interface 34.

The processor 31 can be a general purpose Central Processing Unit (CPU), a micro-processor, an Application Specific Integrated Circuit (ASIC) or one or more integrated circuits for controlling execution of a program according to the present disclosure.

The communication bus 32 can include a path on which the above components can communicate information.

The communication interface 34 can use any transceiver for communicating with other devices or communication networks, such as Ethernet, Radio Access Network (RAN), or Wireless Local Area Network (WLAN).

The memory 33 can be, but not limited to, a Read-Only Memory (ROM) or any other type of static storage device capable of storing static information and instructions, a Random Access Memory (RAN) or any other type of dynamic storage device capable of storing information and instructions, an Electrically Erasable Programmable ROM (EEPROM), a Compact Disc ROM (CD-ROM) or other optical disc memory (including CD, laser disc, optical disc, Digital Versatile Disc (DVD) or Blue-Ray Disc), a magnetic storage medium or other magnetic storage device, or any other medium capable of carrying or storing desired program codes in form of instructions or data structures and accessible by a computer. The memory can be standalone and connected to the processor via the bus, or integrated with the processor.

Here, the memory 33 stores application program codes executable by the processor 31 for performing the solutions of the present disclosure. The processor 31 executes the application program codes stored in the memory 33. When the server is running, the processor 31 executes the computer executable instructions stored in the memory 33 such that the server can: modify, in response to a data modification request from a client, a first target data specified by the data modification request to obtain a second target data; write the second target data into a log file in a specified scheme; and synchronize the log file to a database at a network side.

Optionally, the operation of writing the second target data into the log file in the specified scheme can include: writing the second target data into the log file directly when the log file is empty; or appending the second target data to an end of content stored in the log file when the log file is not empty.

Optionally, the operation of synchronizing the log file to the database at the network side can include: extracting a third target data to be synchronized from the log file; synchronizing the third target data to the database at the network side; and deleting the third target data from the log file.

Optionally, after writing the second target data into the log file in the specified scheme, the processor 31 can further return operation success prompt information to the client.

Optionally, the processor 31 can further read the log file from a local memory when the server is activated; and update data in the database at the network side based on content stored in the log file.

The embodiments of the present disclosure provide a server. Each time the data in the memory is modified, it can be stored in the log file synchronously and then the log file can be synchronized to the database at the network side. Since the log file can be stored rapidly at the local storage of the server, even if the server is powered down, it is possible to ensure that the modified data will not be lost. Compared with the conventional solution which needs to synchronize the data in the memory to the database at the network side by periodically importing the data to the database, the data can be written into the log file rapidly, so as to ensure that the modified data will not be lost when the server is powered down, thereby improving the stability of data storage.

According to an embodiment of the present disclosure, a computer readable storage medium is provided. The computer readable storage medium has a computer program stored thereon. The program, when executed by a processor, causes the processor to perform the following method steps of:
modifying, in response to a data modification request from a client, a first target data specified by the data modification request to obtain a second target data;
writing the second target data into a log file in a specified scheme; and
synchronizing the log file to a database at a network side.

Optionally, the operation of writing the second target data into the log file in the specified scheme can include: writing the second target data into the log file directly when the log file is empty; or appending the second target data to an end of content stored in the log file when the log file is not empty.

Optionally, the operation of synchronizing the log file to the database at the network side can include: extracting a third target data to be synchronized from the log file; synchronizing the third target data to the database at the network side; and deleting the third target data from the log file.

Optionally, the method steps can further include, subsequent to writing the second target data into the log file in the specified scheme: returning operation success prompt information to the client.

Optionally, the method steps can further include: reading the log file from a local memory when the server is activated; and updating data in the database at the network side based on content stored in the log file.

The embodiments of the present disclosure provide a computer readable medium. Each time the data in the memory is modified, it can be stored in the log file synchronously and then the log file can be synchronized to the database at the network side. Since the log file can be stored rapidly at the local storage of the server, even if the server is powered down, it is possible to ensure that the modified data will not be lost. Compared with the conventional solution which needs to synchronize the data in the memory to the database at the network side by periodically importing the data to the database, the data can be written into the log file rapidly, so as to ensure that the modified data will not be lost when the server is powered down, thereby improving the stability of data storage.

It can be appreciated by those skilled in the art that, for the operations of the above described systems, apparatuses and units, reference can be made to the corresponding processes described in connection with the above method embodiments and details thereof will be omitted here for the sake of convenience and simplicity.

It can be appreciated from the embodiments of the present disclosure that the disclosed systems, apparatuses methods can be implemented in alternative ways. The apparatus embodiments as described above are illustrative only. For example, while the units have been divided in accordance with their logical functions, other divisions are possible in practice. For example, more than one unit or element can be combined or can be integrated into another system, or some features can be ignored or omitted. In addition, the coupling, direct coupling or communicative connection between various components as shown or discussed can be an indirect coupling or communicative connection via some interface, device or unit and can be electrical, mechanical or in another form.

The units described above as separated may or may not be physically separated. The components shown as units may or may not be physical units. They can be co-located or can be distributed over a number of network elements. Depending on actual requirements, some or all of the units can be selected to achieve the object of the present disclosure.

Further, all the functional units in various embodiments of the present disclosure can be integrated within one processing unit, each of these units can be a separate unit, or two or more units can be integrated into one unit. Such integrated unit can be implemented in hardware, possibly in combination with software functional units.

The above integrated units, when implemented in software function units, can be stored in a computer readable storage medium. The software function units can be stored in a storage medium, which may be any of various mediums capable of storing program codes, such as a USB disk, a mobile hard disk, a Read Only Memory (ROM), a Random Access Memory (RAM), a magnetic disk or an optical disc or the like, containing instructions which cause a computer device (which can be a personal computer, a server, a network device or the like) to perform at least a portion of the steps of the methods according to the embodiments of the present disclosure.

While the preferred embodiments of the present disclosure have been described above, the scope of the present disclosure is not limited thereto. Various modifications, equivalent alternatives or improvements can be made by those skilled in the art without departing from the scope of the present disclosure. These modifications, equivalent alternatives and improvements are to be encompassed by the scope of the present disclosure.

## Claims

1. A method for information processing, performed by a server, comprising:
modifying, in response to a data modification request from a client, a first target data specified by the data modification request to obtain a second target data;
writing the second target data into a log file in a specified scheme; and
synchronizing the log file to a database at a network side.

2. The method of claim 1, wherein said writing the second target data into the log file in the specified scheme comprises:
writing the second target data into the log file directly when the log file is empty; or
appending the second target data to an end of content stored in the log file when the log file is not empty.

3. The method of claim 1, wherein said synchronizing the log file to the database at the network side comprises:
extracting a third target data to be synchronized from the log file;
synchronizing the third target data to the database at the network side; and
deleting the third target data from the log file.

4. The method of claim 1, further comprising, subsequent to writing the second target data into the log file in the specified scheme:
returning operation success prompt information to the client.

5. The method of claim 1, further comprising:
reading the log file from a local memory when the server is activated; and
updating data in the database at the network side based on content stored in the log file.

6. An apparatus for information processing, in a server, comprising:
a modifying unit configured to modify, in response to a data modification request from a client, a first target data specified by the data modification request to obtain a second target data;
a writing unit configured to write the second target data into a log file in a specified scheme; and
a synchronizing unit configured to synchronize the log file to a database at a network side.

7. The apparatus of claim 6, wherein the writing unit is configured to:
write the second target data into the log file directly when the log file is empty; or
append the second target data to an end of content stored in the log file when the log file is not empty.

8. The apparatus of claim 6, wherein the synchronizing unit comprises:
an extracting module configured to extract a third target data to be synchronized from the log file;
a synchronizing module configured to synchronize the third target data to the database at the network side; and
a deleting module configured to delete the third target data from the log file.

9. The apparatus of claim 6, further comprising:
a returning unit configured to return operation success prompt information to the client.

10. The apparatus of claim 6, further comprising:
a reading unit configured to read the log file from a local memory when the server is activated; and
an updating unit configured to update data in the database at the network side based on content stored in the log file.

11. A server, comprising a processor, a memory, a communication interface and a bus, wherein the memory stores computer executable instructions, the processor is connected to the memory via the bus, and when the server is operating, the processor executes the computer executable instructions stored in the memory to cause the server to perform the method according to any of claims 1-5.

12. A computer readable storage medium having a computer program stored thereon, the program, when executed by a processor, causing the processor to perform the method according to any of claims 1-5.
